# EUROPÄISCHE PATENTANMELDUNG

(11) **EP 2 230 431 A1**
(43) Veröffentlichungstag der Anmeldung: **22.09.2010**
(21) Anmeldenummer: 09003790.4
(22) Anmeldetag: 16.03.2009
(51) Int. Cl.: F16K 31/56, F16K 47/02, F01D 17/14, F16K 1/44

(54) **Kompaktes Regel-Schnellschluss-Ventil für eine Dampfturbine**

(71) Anmelder: Siemens Aktiengesellschaft, 80333 München (DE)
(72) Erfinder: Bennauer, Martin, 46242 Bottrop (DE); Flohr, Ningsih, 45481 Mülheim a.d. Ruhr (DE); Nienhaus, Michael, 46325 Borken (DE); Schindler, Christoph, 45219 Essen (DE); Weltersbach, Dirk, 44805 Bochum (DE)

(57) **Zusammenfassung**

Ein Regel-Schnellschluss-Ventil für eine Dampfturbine weist ein Ventilgehäuse (2) und einen Regelventilkegel (6), der in dem Ventilgehäuse (2) entlang seiner Mittelachse verschiebbar angeordnet ist, wodurch der Regelventilkegel (6) in eine Offenstellung, in der der Regelventilkegel (6) von einem mit seinem Regelventilkegelmantel (7) an dem Ventilgehäuse (2) ausgebildeten Regelventilsitz (8) abgehoben ist, und in eine Geschlossenstellung bringbar ist, in der der Regelventilkegel (6) an dem Regelventilsitz (7) anliegt, sowie eine Schnellschlusskappe (11) auf, die in dem Ventilgehäuse (2) verschiebbar angeordnet ist, wodurch die Schnellschlusskappe (11) in eine Sperrposition bringbar ist, in der sie den Regelventilkegel (6) an der dem Regelventilkegelmantel (7) abgewandten Seite (9) abdeckt und dabei derart an dem Ventilgehäuse (2) anliegt ist, dass der Regelventilsitz (8) für Dampf (5) von der Schnellschlusskappe versperrt ist.

## Beschreibung

### Beschreibung

Kompaktes Regel-Schnellschluss-Ventil für eine Dampfturbine

Die Erfindung betrifft ein Regel-Schnellschluss-Ventil für eine Dampfturbine, wobei in dem Regel-Schnellschluss-Ventil ein Regelventil und ein Schnellschlussventil miteinander kombiniert sind.

An einer Dampfturbine, die beispielsweise in einem Dampfkraftwerk eingesetzt ist, ist für den sicheren Betrieb der Dampfturbine frischdampfseitig eine Absperrung durch ein Schnellschlussventil und zur Regelung der Frischdampfzufuhr zu der Dampfturbine ein Regelventil vorgesehen. Das Regelventil und das Schnellschlussventil sind hintereinander jeweils in ein separates Ventilgehäuse eingebaut. Aus Sicherheitsgründen ist die Schnellschlussfähigkeit durch das Regelventil und das Schnellschlussventil redundant bereitgestellt. Das Regelventil und das Schnellschlussventil weisen jeweils eigene Tellerfedern auf, die im Störfall zum schnellen Schließen der Ventile führen. Herkömmlich sind das Schnellschlussventil und das Regelventil als in Reihe geschaltete Hubventile ausgeführt, wobei eines der Hubventile die Schnellschlussfunktion ausübt und mit dem anderen Hubventil die Frischdampfmassenstromregelung bewerkstelligt wird. Die Hubventile sind beispielsweise als Einsetzventile gebaut, die wegen ihrer guten Dichtheit und ihres geringen Druckverlusts vorteilhaft sind. Allerdings sind herkömmlich die Hubventile mit einem großen und schweren Gehäuse konstruiert, woraus ein hoher Materialeinsatz resultiert. Die Folge hiervon sind ein hoher Herstellungsaufwand bei hohen Kosten. Ferner haben die herkömmlichen Hubventile einen großen Platzbedarf, so dass die frischdampfseitige Verrohrung an dem Dampfturbinengehäuse entsprechend voluminös ausfällt.

Aufgabe der Erfindung ist es ein Regel-Schnellschluss-Ventil für eine Dampfturbine zu schaffen, wobei das Regel-Schnellschluss-Ventil eine kompakte und materialeinsparende sowie eine kostengünstige Konstruktion hat.

Das erfindungsgemäße Regel-Schnellschluss-Ventil für eine Dampfturbine weist ein Ventilgehäuse und einen Regelventilkegel, der in dem Ventilgehäuse entlang seiner Mittelachse verschiebbar angeordnet ist, wodurch der Regelventilkegel in eine Offenstellung, in der der Regelventilkegel von einem mit seinem Regelventilkegelmantel an dem Ventilgehäuse ausgebildeten Regelventilsitz abgehoben ist, und in eine Geschlossenstellung bringbar ist, in der der Regelventilkegel an dem Regelventilsitz anliegt, sowie eine Schnellschlusskappe auf, die in dem Ventilgehäuse verschiebbar angeordnet ist, wodurch die Schnellschlusskappe in eine Sperrposition bringbar ist, in der sie den Regelventilkegel an der dem Regelventilkegelmantel abgewandten Seite abdeckt und dabei derart an dem Ventilgehäuse anliegt, dass der Regelventilsitz für Dampf von der Schnellschlusskappe versperrt ist.

Somit sind in dem erfindungsgemäßen Regel-Schnellschluss-Ventil ein Regelventil und ein Schnellschlussventil kombiniert in das einteilige Ventilgehäuse eingebaut, wobei das Regelventil mit dem Regelventilkegel und das Schnellschlussventil mit der Schnellschlusskappe realisiert ist. Dadurch, dass das Regelventil und das Schnellschlussventil in dem erfindungsgemäßen Regel-Schnellschluss-Ventil miteinander kombiniert sind, hat das Regel-Schnellschluss-Ventil eine platzsparende Anordnung. Damit ist das Volumen des Ventilgehäuses verglichen mit den herkömmlichen Ventilgehäusen für ein herkömmliches Regelventil und ein herkömmliches Schnellschlussventil reduziert, wodurch der Materialeinsatz und letztlich die Herstellungskosten für das erfindungsgemäße Regel-Schnellschluss-Ventil reduziert sind.

Die Schnellschlusskappe ist bevorzugt parallel zur Mittelachse des Regelventilkegels verschiebbar. Dabei ist bevorzugt die Schnellschlusskappe an der dem Regelventilkegelmantel abgewandten Seite des Regelventilkegels angeordnet. Bevorzugtermaßen ist die Schnellschlusskappe von einem kreisförmigen Deckel und einer am Außenumfang des Deckels umlaufenden Außenrandzylinderwandung gebildet, die an ihrer dem Regelventilkegel zugewandten Seite eine umlaufende Randkante aufweist, die in der Sperrstellung an dem Ventilgehäuse anliegt, wobei die Schnellschlusskappe über den Regelventilkegel gestülpt ist.

Das Ventilgehäuse weist bevorzugt eine Dampfeintrittsöffnung, durch die hervorgerufen durch ihre Orientierung der Dampf senkrecht zur Mittelachse des Regelventilkegels in das Ventilgehäuse einströmbar ist, und eine Dampfaustrittsöffnung auf, durch die hervorgerufen durch ihre Orientierung der Dampf parallel zur Mittelachse des Regelventilkegels aus dem Ventilgehäuse ausströmbar ist. Bevorzugt ist der Regelventilsitz an der Dampfaustrittsöffnung angesiedelt. Ferner ist es bevorzugt, dass der Regelventilkegel eine Regelventilspindel und die Schnellschlusskappe eine Schnellschlussspindel aufweisen, wobei die Spindeln parallel zur Mittelachse längsverschiebbar gelagert sind. Die Regelventilspindel ist bevorzugt an der dem Regelventilkegelmantel abgewandten Seite angebracht und durch die Schnellschlusskappe hindurchgeführt angeordnet. Ferner weist bevorzugt das Ventilgehäuse einen Gehäusewandabschnitt auf, der für die Regelventilkegelspindel und für die Schnellschlusskappe jeweils ein Spindelführungsloch aufweist, durch das die entsprechende Spindel geführt ist. Dabei ist bevorzugt jede Spindel außerhalb des Gehäusewandabschnitts mit einem Tellerfederpaket zur Betätigung der jeweiligen Spindel versehen. Der Gehäusewandabschnitt ist bevorzugt versetzt angeordnet, so dass im Inneren des Ventilgehäuses eine Kammer ausgebildet ist, in der die Schnellschlusskappe unterbringbar ist, wenn die Schnellschlusskappe nicht in der Sperrstellung ist.

Im Folgenden wird eine bevorzugte Ausführungsform des erfindungsgemäßen Regel-Schnellschluss-Ventils anhand der beigefügten schematischen Zeichnungen erläutert.

### Es zeigen:

- Fig. 1: die Ausführungsform des erfindungsgemäßen Regel-Schnellschluss-Ventils im Schnellschlussbetrieb und
- Fig. 2: die Ausführungsform aus Fig. 1, wobei das Regel-Schnellschluss-Ventil im Regelbetrieb ist.

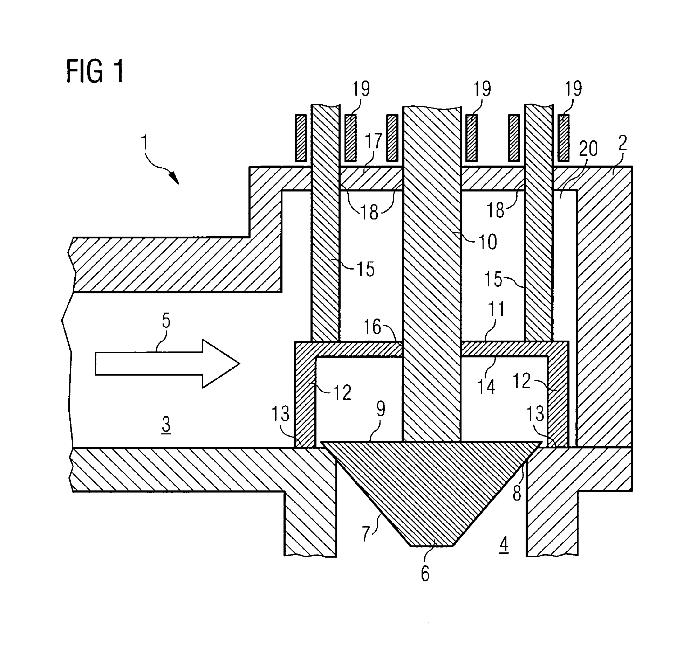

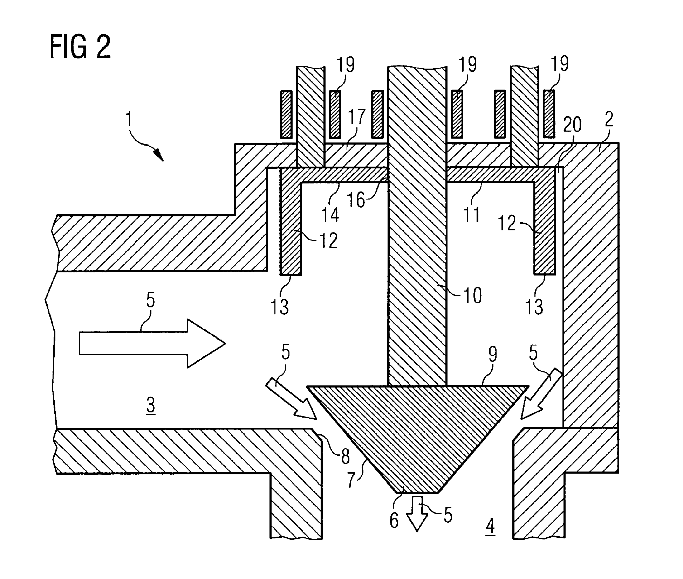

Wie es aus Fig. 1 und 2 ersichtlich ist, weist ein Regel-Schnellschluss-Ventil 1 ein Ventilgehäuse 2 auf, das eine Dampfeintrittsöffnung 3 und eine Dampfaustrittsöffnung 4 hat. An die Dampfeintrittsöffnung 3 ist eine Frischdampfleitung einer Frischdampfschiene anzuschließen, wohingegen ein Frischdampfstutzen einer Dampfturbine an die Dampfaustrittsöffnung 4 anzuschließen ist. Die Dampfeintrittsöffnung 3 und die Dampfaustrittsöffnung 4 sind in dem Ventilgehäuse 2 derart geformt, dass, wenn das Regel-Schnellschluss-Ventil 1 von einer Dampfströmung 5 durchströmt wird, die Dampfströmung 5 in der Dampfeintrittsöffnung 3 eine Orientierung hat, die von der Orientierung der Dampfströmung 5 in der Dampfaustrittsöffnung 4 um 90° gedreht ist. In Fig. 1 und 2 ist die Dampfströmung 5 in der Dampfeintrittsöffnung 3 waagerecht von links nach rechts und in der Dampfaustrittsöffnung 4 senkrecht von oben nach unten gezeigt.

In dem Ventilgehäuse 2 ist ein Regelventilkegel 6 angeordnet, der einen Regelventilkegelmantel 7 aufweist. Der Regelventilkegel 6 ist in dem Ventilgehäuse 2 derart angeordnet, dass dieser mit seinem Regelventilkegelmantel 7 an dem Ventilgehäuse 2 im Bereich der Austrittsöffnung 4 einen Regelventilsitz 8 bilden kann. Dem Regelventilkegelmantel 7 abgewandt weist der Regelventilkegel 6 eine Regelventilkegelrückseite 9 auf. Mittig an der Regelventilkegelrückseite 9 und auf der Mittelachse des Regelventilkegels 6 liegend ist eine Regelventilspindel 10 befestigt. Die Regelventilspindel 10 erstreckt sich in Fig. 1 und 2 nach oben, wobei unter Längsverschieben der Regelventilspindel 10 der Regelventilkegel 6 entlang seiner Mittelachse längsverschoben werden kann. Wird der Regelventilkegel 6 in eine Position gebracht, in der der Regelventilkegelmantel 7 an dem Ventilgehäuse 2 anliegt, so ist der Regelventilsitz 8 für die Dampfströmung 5 unpassierbar. Wird hingegen der Regelventilkegel 6 von dem Ventilgehäuse 2 an dem Regelventilsitz 8 abgehoben, so kann die Dampfströmung 5 den Regelventilsitz 8 passieren und aus dem Ventilgehäuse 2 durch die Dampfaustrittsöffnung 4 strömen. Das Regel-Schnellschluss-Ventil 1 weist ferner eine Schnellschlusskappe 11 auf, die in dem Ventilgehäuse 2 angeordnet ist. Die Schnellschlusskappe 11 weist eine Außenrandzylinderwandung 12 auf, die symmetrisch die Mittelachse des Regelventilkegels 6 umlaufend angeordnet ist. Die Außenrandzylinderwandung 12 weist an ihrer einen axialen Längsseite eine Randkante 13 und an ihrer anderen axialen Längsseite einen Deckel 14 auf, wobei die Randkante 13 dem Regelventilkegel 6 zugewandt und der Deckel 14 dem Regelventilkegel 6 abgewandt angeordnet ist. An dem Deckel 14 sind mehrere, typischerweise drei Schnellschlussspindeln 15 (wovon zwei dargestellt sind) befestigt, die parallel zur Mittelachse des Regelventilkegels 6 angeordnet sind, so dass unter Längsverschieben der Schnellschlussspindeln 15 die Schnellschlusskappe 11 in dem Ventilgehäuse 2 längsverschoben werden kann. In dem Deckel 14 ist ein Durchgangsloch 16 mittig vorgesehen, durch das die Regelventilspindel 10 sich erstreckt. In dem Durchgangsloch 16 ist die Regelventilspindel 10 längsverschiebbar zu dem Deckel 14 und stets dampfdicht gelagert.

Wie es in Fig. 2 gezeigt ist, passiert beim Durchströmen der Dampfströmung 5 durch das Regel-Schnellschluss-Ventil 1 die Dampfströmung 5 zuerst die Eintrittsöffnung 3, dann die Schnellschlusskappe 11, den Regelventilkegel 6 und schließlich die Dampfaustrittsöffnung 4. Die Schnellschlusskappe 11 ist oberhalb des Regelventilkegels 6 angeordnet, wobei die Mittelachsen der Schnellschlusskappe 11 und des Regelventilkegels 6 zusammenfallen. Der Innendurchmesser der Außenrandzylinderwandung 12 ist größer als der maximale Außendurchmesser des Regelventilkegels 6 an der Regelventilkegelrückseite 9, so dass, wie es in Fig. 1 gezeigt ist, die Schnellschlusskappe 11 über den Regelventilkegel 6 und somit über die Dampfaustrittsöffnung 4 stülpbar ist. Dabei liegt um den Regelventilsitz 8 die Schnellschlusskappe 11 mit der Randkante 13 der Außenrandzylinderwandung 12 an dem Ventilgehäuse 2 dampfdicht an, wodurch die Dampfaustrittsöffnung 4 dampfdicht verschlossen ist. Dabei ist der Regelventilkegel 6 von der Schnellschlusskappe 11 an der Dampfaustrittsöffnung 4 eingeschlossen, so dass das Regel-Schnellschluss-Ventil 1 im Schnellschluss ist.

Im Regelbetrieb des Regel-Schnellschluss-Ventils 1 ist die Schnellschlusskappe 11 von dem Regelventilsitz 8 abgehoben, so dass die Randkante 13 nicht mehr an dem Ventilgehäuse 2 anliegt und so der Regelventilsitz 8 von der Dampfströmung 5 zugänglich ist. In Abhängigkeit des Abstands des Regelventilmantels 7 von dem Regelventilsitz 8 ist der Massenstrom der Dampfströmung 5 steuerbar.

In dem Ventilgehäuse 2 ist ein Gehäusewandabschnitt 17 vorgesehen, in dem für die Regelventilspindel 10 und die Schnellschlussspindeln 15 jeweils ein Spindelführungsloch 18 zum Longitudinalführen vorgesehen ist. Außerhalb des Ventilgehäuses 2 ist für jede Spindel 10, 15 an dem Gehäusewandabschnitt 17 jeweils ein Tellerfederpaket 19 zum Betätigen der Spindeln 10, 15 angebaut. Der Gehäusewandabschnitt 17 ist an dem Ventilgehäuse 2 nach außen versetzt angeordnet, so dass im Inneren des Ventilgehäuses 2 eine Kammer 20 ausgebildet ist, in die die Schnellschlusskappe 11 einfahrbar ist, wenn die Schnellschlusskappe 11 von dem Regelventilsitz 8 abgehoben ist, wie es in Fig. 2 gezeigt ist.

In Fig. 2 ist das Regel-Schnellschluss-Ventil 1 im Regelbetrieb gezeigt. Dabei ist die Schnellschlusskappe 11 in die Kammer 20 eingefahren und der Regelventilkegel 6 an dem Regelventilsitz 8 entsprechend eines gewünschten Massenstroms der Dampfströmung 5 abgehoben. Beim Schnellschluss bewegt sich die Schnellschlusskappe 11 durch ihre Schnellschlussspindeln 15 betätigt aus der Kammer 20 nach unten, so dass die Schnellschlusskappe 11 den Regelventilkegel 6 überstülpt und durch das Anlegen der Randkante 13 an dem Ventilgehäuse 2 um den Regelventilsitz 8 den Regelventilkegel 6 von der Zuströmung der Dampfströmung 5 in der Dampfeintrittsöffnung 3 räumlich isoliert. Nachdem die Schnellschlusskappe 11 über dem Regelventilkegel 6 gestülpt ist und die Dampfaustrittsöffnung 6 verschlossen ist, wird der Regelventilkegel 6 auf den Regelventilsitz 8 abgesenkt, wie es in Fig. 1 gezeigt ist. Im Regelbetrieb des Regel-Schnellschluss-Ventils 1 ist die Schnellschlusskappe 11 in der Kammer 20 versenkt angeordnet, so dass die Dampfströmung 5 von der Schnellschlusskappe 11 ungestört ist. Ist hingegen das Regel-Schnellschluss-Ventil 1 im Schnellschluss, so versperrt die Schnellschlusskappe 11 die Dampfaustrittsöffnung 4, so dass die Dampfströmung 5 durch das Regel-Schnellschluss-Ventil 1 nicht gelangen kann.

## Patentansprüche

1. Regel-Schnellschluss-Ventil für eine Dampfturbine, mit einem Ventilgehäuse (2) und einem Regelventilkegel (6), der in dem Ventilgehäuse (2) entlang seiner Mittelachse verschiebbar angeordnet ist,
wodurch der Regelventilkegel (6) in eine Offenstellung, in der der Regelventilkegel (6) von einem mit seinem Regelventilkegelmantel (7) an dem Ventilgehäuse (2) ausgebildeten Regelventilsitz (8) abgehoben ist, und in eine Geschlossenstellung bringbar ist, in der der Regelventilkegel (6) an dem Regelventilsitz (8) anliegt, sowie einer Schnellschlusskappe (11), die in dem Ventilgehäuse (2) verschiebbar angeordnet ist,
wodurch die Schnellschlusskappe (11) in eine Sperrposition bringbar ist, in der sie den Regelventilkegel (6) an der dem Regelventilkegelmantel (7) abgewandten Seite (9) abdeckt und dabei derart an dem Ventilgehäuse (2) anliegt ist, dass der Regelventilsitz (8) für Dampf (5) von der Schnellschlusskappe versperrt ist.

2. Regel-Schnellschlussventil gemäß Anspruch 1,
wobei die Schnellschlusskappe (11) parallel zur Mittelachse des Regelventilkegels (6) verschiebbar ist.

3. Regel-Schnellschlussventil gemäß Anspruch 2,
wobei die Schnellschlusskappe (11) an der dem Regelventilkegelmantel (7) abgewandten Seite des Regelventilkegels (6) angeordnet ist.

4. Regel-Schnellschlussventil gemäß Anspruch 3,
wobei die Schnellschlusskappe (11) von einem kreisförmigen Deckel (14) und einer am Außenumfang des Deckels (14) umlaufenden Außenrandzylinderwandung (12) gebildet ist, die an ihrer dem Regelventilkegel (6) zugewandten Seite eine umlaufende Randkante (13) aufweist, die in der Sperrstellung an dem Ventilgehäuse (2) anliegt,
wobei die Schnellschlusskappe (11) über den Regelventilkegel (6) gestülpt ist.

5. Regel-Schnellschluss-Ventil gemäß einem der Ansprüche 1 bis 4,
wobei das Ventilgehäuse (2) eine Dampfeintrittsöffnung (3), durch die hervorgerufen durch ihre Orientierung der Dampf (5) senkrecht zur Mittelachse des Regelventilkegels (6) in das Ventilgehäuse (2) einströmbar ist, und eine Dampfaustrittsöffnung (4) aufweist, durch die hervorgerufen durch ihre Orientierung der Dampf (5) parallel zur Mittelachse des Regelventilkegels (6) aus dem Ventilgehäuse (2) ausströmbar ist.

6. Regel-Schnellschluss-Ventil gemäß Anspruch 5,
wobei der Regelventilsitz (8) an der Dampfaustrittsöffnung (4) angesiedelt ist.

7. Regel-Schnellschluss-Ventil gemäß Anspruch 6,
wobei der Regelventilkegel (6) eine Regelventilspindel (10) und die Schnellschlusskappe (11) eine Schnellschlussspindel (15) aufweisen,
wobei die Spindeln (10, 15) parallel zur Mittelachse längsverschiebbar gelagert sind.

8. Regel-Schnellschluss-Ventil gemäß Anspruch 7,
wobei die Regelventilspindel (10) an der dem Regelventilkegelmantel (7) abgewandten Seite (9) angebracht ist und durch die Schnellschlusskappe (13) hindurch geführt angeordnet ist.

9. Regel-Schnellschluss-Ventil gemäß Anspruch 8,
wobei das Ventilgehäuse (2) einen Gehäusewandabschnitt (17) aufweist, der für die Regelventilkegelspindel (10) und für die Schnellschlussspindel (15) jeweils ein Spindelführungsloch (18) aufweist, durch das die entsprechende Spindel (10, 15) geführt ist.

10. Regel-Schnellschluss-Ventil gemäß Anspruch 9,
wobei jede Spindel (10, 15) außerhalb des Gehäusewandabschnitts (17) mit einem Tellerfederpaket (19) zur Betätigung der jeweiligen Spindel (10, 15) versehen ist.

11. Regel-Schnellschluss-Ventil gemäß Anspruch 9 oder 10,
wobei der Gehäusewandabschnitt (17) versetzt angeordnet ist, so dass im Inneren des Ventilgehäuses (2) eine Kammer (20) ausgebildet ist, in der die Schnellschlusskappe (11) unterbringbar ist, wenn die Schnellschlusskappe (11) nicht in der Sperrstellung ist.
